(19) Europäisches Patentamt
European Patent Office
Office européen des brevets

(11) **EP 1 666 841 B1**

(12) **EUROPÄISCHE PATENTSCHRIFT**

(45) Veröffentlichungstag und Bekanntmachung des Hinweises auf die Patenterteilung:
**23.07.2008 Patentblatt 2008/30**

(51) Int Cl.:
*G01C 19/56* *(2006.01)*    *G01P 9/04* *(2006.01)*

(21) Anmeldenummer: **05109225.2**

(22) Anmeldetag: **05.10.2005**

(54) **Messfühler mit Selbsttest**

Self testing sensor

Capteur à auto-test

(84) Benannte Vertragsstaaten:
**DE FR GB IT**

(30) Priorität: **02.12.2004   DE 102004058183**

(43) Veröffentlichungstag der Anmeldung:
**07.06.2006   Patentblatt 2006/23**

(73) Patentinhaber: **ROBERT BOSCH GMBH**
**70442 Stuttgart (DE)**

(72) Erfinder: **Lang, Markus**
**72762, Reutlingen (DE)**

(56) Entgegenhaltungen:
**EP-A- 1 174 683        DE-A1- 19 939 998**

## Beschreibung

Stand der Technik

Die Erfindung geht aus von einem Messfühler mit einer Selbsttestfunktion, einem beweglichen Teil und einer Auswerteeinheit. Das bewegliche Teil weist dabei einen eigenen Antrieb auf. Die Messgröße ist durch eine Auslenkung des beweglichen Teils gegenüber einer Bezugslage repräsentiert. Durch den Antrieb ist wenigstens eine weitere, parasitäre Auslenkung des beweglichen Teils gegeben.

Sensoren in sicherheitskritischen Anwendungen werden in der Regel mit Selbsttestfunktionen ausgestattet, um im Startfall oder auch während des Betriebs die korrekte Funktionalität des Sensors prüfen zu können. Im Falle einer nicht korrekten Selbsttestantwort kann das signalverarbeitende System (z.B. ein Steuergerät) die Fehlfunktion über eine Warnlampe anzeigen und die entsprechenden Sicherheitssysteme deaktivieren. Hierdurch wird der Nutzer einerseits gewarnt, dass sein betreffendes Sicherheitssystem nicht zur Verfügung steht und er eine Werkstatt konsultieren sollte, andererseits kann durch die Deaktivierung eine mögliche Fehlauslösung vermieden werden.

Um ein Selbsttestsignal zu erzeugen werden zusätzliche Antriebskomponenten benötigt, die den Sensor in gleicher Weise anregen wie es auch beim Anliegen der zu sensierenden Messgröße erfolgen würde. Z.B. wird im Falle eines Beschleunigungssensors die seismische Masse durch eine elektrostatische Kraft an zusätzlichen Elektroden in die gleiche Richtung und mit vergleichbarer Amplitude ausgelenkt wie im Falle einer real anliegen Beschleunigung durch ebendiese. Im Falle eines Drehratensensors kann durch anlegen einer elektrostatischen Kraft an zusätzlichen Elektroden eine Corioliskraft simuliert werden und der Sensor entsprechend sein Messgröße angeregt werden. Mit diesem Verfahren kann sowohl die mechanische Beweglichkeit von Sensoren als auch der elektrische Signalpfad getestet werden.

Die Druckschrift EP 1 174 683 offenbart einen Drehratensensor, der nach dem Stimmgabelprinzip aufgebaut ist. Der Drehratensensor weist eine Selbsttestfunktion auf, die den Funktionsausfall des Sensors testet. Dazu wird das absolute Quadratursignal betrachtet.

Vorteile der Erfindung

Die Erfindung geht aus von einem Messfühler mit einer Selbsttestfunktion; einem beweglichen Teil und einer Auswerteeinheit. Das bewegliche Teil weist dabei einen eigenen Antrieb auf. Die Messgröße ist durch eine Auslenkung des beweglichen Teils gegenüber einer Bezugslage repräsentiert: Durch den Antrieb ist wenigstens eine weitere, parasitäre Auslenkung des beweglichen Teils gegeben. Der Kern der Erfindung besteht darin, dass die Selbsttestfunktion durch Bewertung der parasitären Auslenkung in der Auswerteeinheit realisiert ist. Vorteilhaft ist hierbei, dass für die Selbsttestfunktion kein weiterer separater Antrieb mehr vorgesehen ist. Vorteilhaft ist die parasitäre Auslenkung unabhängig von der Messgröße. Dies erlaubt, den Selbsttest auch während des Messbetriebes durchzuführen. Vorteilhaft ist weiterhin, wenn die parasitäre Auslenkung in dieselbe Richtung wie die Messgröße erfolgt. Dies erlaubt eine Bewertung der Auslenkbarkeit des beweglichen Teiles in der durch die Messgröße vorgegebenen Richtung. Eine besonders vorteilhafte Ausgestaltung der Erfindung sieht vor, dass der Antrieb dazu geeignet ist, das bewegliche Teil in eine Antriebsschwingung zu versetzen. Aus einer periodischen Antriebsbewegung folgt auch eine periodische parasitäre Auslenkung, die sich insbesondere mit elektronischen Auswertevorrichtungen besonders einfach nachweisen und bewerten lässt. Vorteilhaft ist dabei weiter, wenn die parasitäre Auslenkung proportional zur Amplitude der Antriebsschwingung des beweglichen Teils ist. Dies ermöglicht, durch Steuerung der Antriebsschwingung die resultierende parasitäre Auslenkung quantitativ zu bewerten.

Vorteilhaft ist auch, wenn die parasitäre Auslenkung phasenverschoben zur Auslenkung durch die Messgröße ist. In diesem Fall lässt sich die parasitäre Auslenkung in der Auswerteeinheit durch einfache elektronische Mittel, z.B. durch einen phasenempfmdlichen Verstärker, leicht von der Auslenkung infolge der Messgröße des Messfühlers isolieren und auswerten. Die phasenempfindliche Auswertung der parasitären Auslenkung stellt daher eine vorteilhafte Ausgestaltung der Erfindung dar.

Vorteilhaft ist auch, wenn die parasitäre Auslenkung einen Signalversatz des die Messgröße repräsentierenden Messsignals bewirkt. Die Selbsttestfunktion kann in diesem Fall durch eine Bewertung dieses Signalversatzes realisiert sein. Eine vorteilhafte Ausgestaltung des erfindungsgemäßen Messfühlers beinhaltet somit, dass die Selbsttestfunktion durch Auswertung des Signalversatzes des die Messgröße repräsentierenden Messsignals realisiert ist.

Vorteilhaft ist der Messfühler ein mikromechanischer Sensor. Mikromechanische Sensoren ziehen aus dem Entfall eines zusätzlichen Antriebs für eine Selbsttestfunktion besonderen Nutzen, weil wertvoller Platz auf dem Sensorelement eingespart wird, der dann konstruktiv für die eigentliche Messaufgabe genutzt werden kann.

Eine besonders vorteilhafte Ausgestaltung des erfindungsgemäßen Messfühlers sieht vor, dass der Messfühler als mikromechanischer Drehratensensor ausgestaltet ist. Das bewegliche Teil ist dabei vorteilhaft als seismische Schwingmasse ausgestaltet. Der Antrieb ist vorteilhaft als kapazitive Antriebsstruktur ausgestaltet ist, welche geeignet ist, die seismische Schwingmasse in eine Antriebsschwingung zu versetzen. Die Schwingmasse weist vorteilhaft neben der Amplitude der Antriebsschwingung eine zusätzliche parasitäre Auslenkung in wenigstens einer Messrichtung für die Drehrate auf. Die parasitäre Auslenkung kommt aufgrund von Inhomogenitäten der Sensorstruktur zustande wie sie im Allgemeinen bei jedem mikromechanischen Sensor gegeben sind.

Weitere vorteilhafte Ausgestaltungen sind den abhängigen Ansprüchen zu entnehmen.

Die Erfindung nutzt die parasitäre Eigenbewegung (Quadratur) von aktiven Sensoren (wie z.B. einem Drehratensensor) zur Bewertung des mechanischen und elektrischen Signalpfades. Eine zusätzliche Selbstteststruktur insbesondere in Form von Selbsttestantrieben ist nicht mehr notwendig, wodurch Sensorfläche und Fläche auf dem Auswertechip eingespart werden kann.

Das Testen der Mechanik eines Sensors und der zugehörigen Auswerteschaltung erfolgt nicht mehr über Zusatzstrukturen sondern durch Auswertung der inhärent vorhandenen Bewegung, die bei jedem Sensor durch lokale Inhomogenitäten entsteht (die sogenannte Quadratur). Daraus ergeben sich viele Vorteile. Zunächst können die bisher zusätzlich zum eigentlichen Messfühler notwendigen zusätzlichen Strukturen zum Aufbringen eines Testsignals entfallen. Daraus ergibt sich eine Flächenersparnis auf dem Sensorelement und in der Auswerteschaltung; das Prinzip ist sowohl für Sensoren mit vertikaler als auch lateraler Testsignalanregung anwendbar. Weiterhin zieht der Entfall zusätzlicher Kontaktiereinheiten, im Falle mikromechanischer Sensoren den Entfall von Kontaktierungsflächen (engl.: Bondpads) nach sich. Hierdurch ergibt sich eine zusätzliche Flächenersparnis auf dem Sensorelement und in der Auswerteschaltung. Durch den Entfall der Teststrukturen erweitern sich allgemein die Designmöglichkeiten für den betrachteten Messfühler. Infolge des größeren Platzangebotes sind beispielsweise auch größere Nutzsignalelektroden zur Detektion der Auslenkung des beweglichen Teils möglich. Das Selbsttestsignal bei erfindungsgemäßer Ausführung des Messfühlers weist keine Temperatur- oder Alterungseffekte auf.

Zeichnung

Ausführungsbeispiele der Erfindung sind in der Zeichnung dargestellt und in der nachfolgenden Beschreibung näher erläutert.

Fig. 1 zeigt den mikromechanischen Funktionsteil eines Drehratensensor mit Selbsttestelektroden nach Stand der Technik.

Fig. 2 zeigt den mikromechanischen Funktionsteil eines erfindungsgemäßen Drehratensensor ohne Selbsttestelektroden und mit vergrößerten Nutzsignalelektroden.

Fig. 3 zeigt schematisch einen Drehratensensor mit Selbsttestfunktion nach Stand der Technik.

Fig. 4 zeigt schematisch einen erfindungsgemäßen Drehratensensor mit Selbsttestfunktion ohne Selbsttestantrieb.

Beschreibung von Ausführungsbeispielen

Anhand der im folgenden beschriebenen Ausführungsformen soll die Erfindung detailliert dargestellt werden.

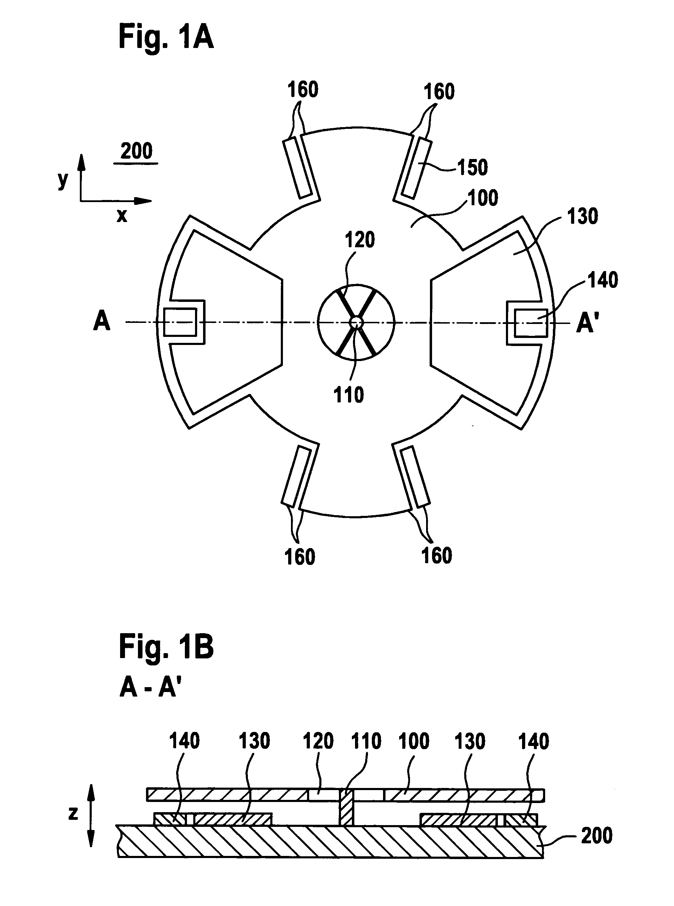

Fig. 1 zeigt den mikromechanischen Funktionsteil eines Drehratensensor mit Selbsttestelektroden nach Stand der Technik. Fig. 1A zeigt den mikromechanischen Funktionsteil in Durchsicht von oben. Fig. 1B zeigt eine Schnittdarstellung des mikromechanischen Funktionsteils. Dargestellt ist ein bewegliches Teil 100, welches das Nachweiselement des Drehratensensors ist. Das bewegliche Teil 100 ist über Schwingfedern 120 und eine Aufhängung 110 an einem Substrat 200 derart befestigt, dass er in der Substratebene (x, y), angeregt durch eine Antriebsstruktur 160, Drehschwingungen ausführen kann. Der mikromechanische Funktionsteil weist weiterhin an dem Substrat 200 Messelektroden 130, Testelektroden 140 und Antriebselektroden 150 auf. Die Antriebselektroden 150 bilden zusammen mit dem gegenüberliegenden beweglichen Teil 100 die Antriebsstrukturen 160. Die Antriebsstrukturen 160 stellen in diesem Beispiel einen kapazitiven Antrieb dar. Die Testelektroden 140 auf dem Substrat 200 bilden zusammen mit dem gegenüberliegenden beweglichen Teil 100 eine zusätzliche Antriebsstruktur für den Selbsttest des Sensors. Durch den, in diesem Beispiel kapazitiven, Selbsttestantrieb 100, 140 wird das bewegliche Teil 100 in Richtung z senkrecht zur Substratebene (x, y) ausgelenkt. Diese Richtung z der Auslenkung entspricht auch der Auslenkung infolge einer einwirkenden Messgröße, hier der Corioliskraft, bei der Detektion. Die Messelektroden 130 auf dem Substrat 200 bilden zusammen mit dem gegenüberliegenden beweglichen Teil 100 Kondensatorstrukturen zum Nachweis der Auslenkung des beweglichen Teils 100. Eine Auslenkung des beweglichen Teils 100 in der Richtung senkrecht zur Substratebene bewirkt eine Abstandsänderung der Elektroden 100 und 130 zueinander, die wie Kondensatorplatten wirken, und damit eine messbare Kapazitätsänderung.

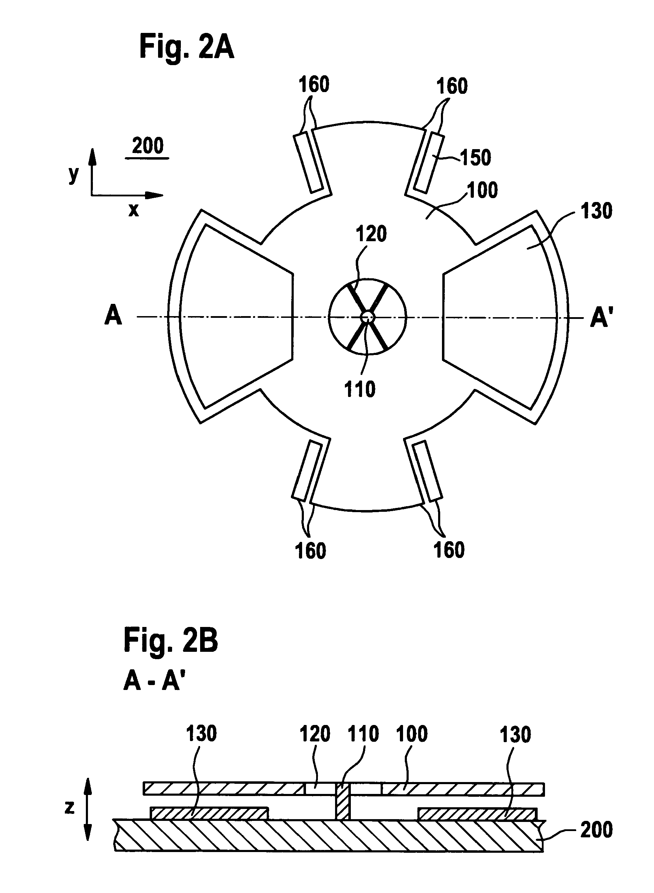

Fig. 2 zeigt den mikromechanischen Funktionsteil eines erfindungsgemäßen Drehratensensor ohne Selbsttestelektroden und mit vergrößerten Nutzsignalelektroden.

Im Unterschied zum Drehratensensor gemäß Stand der Technik, der in Fig. 1 dargestellt ist, sind hier keine Testelektroden 140 vorhanden. Die Messelektroden 130 nehmen zusätzlich den Platz der entfallenen Testelektroden 140 ein und sind entsprechend größer ausgeführt.

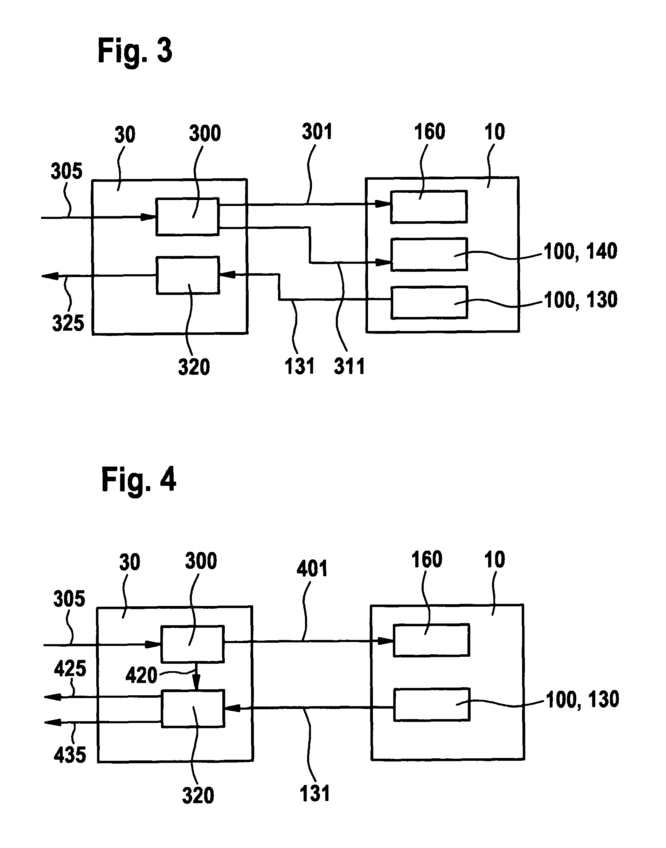

Fig. 3 zeigt schematisch und beispielhaft einen Drehratensensor mit Selbsttestfunktion nach Stand der Technik. Der Sensor weist einen mikromechanischen Funktionsteil 10 mit einem beweglichen Teil 100, Messelektroden 130, Testelektroden 140 und eine Antriebsstruktur 160 auf. Der mikromechanische Teil des Sensors ist in diesem Beispiel gemäß Fig. 1 ausgestaltet. Der Sensor weist weiterhin eine elektrische Schaltung 30 mit einer Antriebseinheit 300 zur Erzeugung einer Antriebsschwingung und zur Erzeugung einer Testauslenkung für die Selbsttestfunktion sowie einer Auswerteeinheit 320 zur Auswertung der Auslenkung des beweglichen Teils 100 auf.

Die Antriebseinheit 300 erzeugt ein elektrisches Antriebssignal 301 welches der kapazitiven Antriebsstruktur 160 zugeleitet wird. Durch periodische elektrostatische Kraftwirkung auf das bewegliche Teil 100 wird dieses zu einer Antriebsschwingung angetrieben. Das bewegliche Teil 100 kann infolge einer einwirkenden Corioliskraft in Messrichtung z ausgelenkt werden wie in Fig. 1 beschrieben.

Wird der Antriebseinheit 300 ein Testanfragesignal 305 zugeleitet, so erzeugt sie ein elektrisches Testantriebssignal 311 welches der Testantriebsstruktur 100, 140 mit der Testelektrode 140 und der gegenüberliegenden Elektrode in Form des beweglichen Teils 100 zugeleitet wird. Mittels elektrostatischer Kraftwirkung infolge elektrischer Aufladung der Testantriebsstruktur wird das bewegliche Teil 100 ebenfalls in Messrichtung z ausgelenkt.

Die Auslenkung in Richtung z wird als Kapazitätsänderung durch die Messelektrode 130 und die gegenüberliegende Elektrode in Form des beweglichen Teils 100 detektiert und als Auslenkungssignal 131 der Auswerteeinheit 320 zugeleitet. Die Auswerteeinheit 320 gibt, entsprechend der Auslenkung, das Sensorsignal 325 aus. Das Sensorsignal 325 kann, in Abhängigkeit vom Testanfragesignal 305, das Ergebnis einer Messung oder eines Selbsttests sein.

Fig. 4 zeigt schematisch und beispielhaft einen erfindungsgemäßen Drehratensensor mit Selbsttestfunktion ohne Selbsttestantrieb. Der Sensor weist einen mikromechanischen Funktionsteil 10 mit einem beweglichen Teil 100, Messelektroden 130, und eine Antriebsstruktur 160 auf. Der mikromechanische Teil des Sensors ist in diesem Beispiel gemäß Fig. 2 ausgestaltet. Der Sensor weist weiterhin eine elektrische Schaltung 30 mit einer Antriebseinheit 300 zur Erzeugung einer Antriebsschwingung und zur Erzeugung einer Testauslenkung für die Selbsttestfunktion sowie einer Auswerteeinheit 320 zur Auswertung der Auslenkung des beweglichen Teils 100 auf.

Die Antriebseinheit 300 erzeugt ein elektrisches Antriebssignal 401 welches der kapazitiven Antriebsstruktur 160 zugeleitet wird. Durch periodische elektrostatische Kraftwirkung auf das bewegliche Teil 100 wird dieses zu einer Antriebsschwingung angetrieben. Das bewegliche Teil 100 kann infolge einer einwirkenden Corioliskraft in Messrichtung z ausgelenkt werden wie in Fig. 1 beschrieben. Durch die größere Ausgestaltung der Messelektroden 130 infolge des Wegfalls der Testelektroden 140 wie in Fig. 2 gezeigt, besitzt der erfindungsgemäße Drehratensensor eine erhöhte Empfindlichkeit.

Darüber hinaus weist das bewegliche Teil 100 infolge von Inhomogenitäten und imperfekter Massenverteilung der mikromechanischen Sensorstruktur eine weitere, sogenannte parasitäre Auslenkung in Messrichtung z auf. Bei dem in diesem Beispiel beschriebenen erfindungsgemäßen Sensor wird diese parasitäre Auslenkung für den Selbsttest ohne zusätzlichen Testantrieb genutzt. Die parasitäre Auslenkung ist in diesem Beispiel proportional zur Amplitude der Antriebsschwingung. Andere funktionale Abhängigkeiten sind denkbar. Abhängig von der Amplitude der Antriebsschwingung treten also parasitäre Auslenkungen bestimmter Amplitude auf. Die parasitäre Auslenkung hat weiterhin gegenüber der Auslenkung durch die Messgröße eine andere Phasenlage. Für den Selbsttest des Sensors wird von der Antriebseinheit 300 ein Antriebssignal 401 mit veränderlicher Amplitude erzeugt und der Antriebsstruktur 160 zugeleitet. Informationen über Amplitude und Phase des Antriebssignals 401 werden auch der Auswerteeinheit 320 zugeleitet, was in dem Signal 420 symbolisch dargestellt ist.

Die Auslenkung des beweglichen Teils 100 in Richtung z wird als Kapazitätsänderung durch die Messelektrode 130 und die gegenüberliegende Elektrode in Form des beweglichen Teils 100 detektiert und als Auslenkungssignal 131 der Auswerteeinheit 320 zugeleitet. Zur Bewertung des Auslenkungssignal 131 können einfach Amplitude und Phasenbeziehung der Signale 401 und 131 herangezogen werden. In der Auswerteeinheit 320 wird dazu das Auslenkungssignal 131 phasenempfindlich bewertet und daraus ein Messsignal 425 sowie ein Testsignal 435 generiert. Dieses Prinzip lässt sich auf weitere aktiv betriebene mechanische Sensoren übertragen.

Aktiv betriebene Sensoren liefern neben dem eigentlichen Messsignal ein um 90° phasenverschobenes Signal aufgrund von Inhomogenitäten der Sensorstruktur, die sogenannte Quadratur. Die Größe dieses Quadratursignals hängt einerseits von der Größe der Inhomogenität andererseits auch von der Auslenkung des aktiven Sensorkerns ab, egal ob es sich um eine rotatorische oder translatorische Bewegung handelt, das heißt das Quadratursignal steht in einem funktionalen Zusammenhang (es ist beispielsweise proportional) zur Amplitude der Antriebsschwingung der aktiven Struktur, das heißt des beweglichen Teils. Das Quadratursignal entsteht aus einer Bewegung, die in derselben Richtung stattfindet, wie die Bewegung die das Messsignal repräsentiert, lediglich in der Phase verschoben (beispielsweise um 90°). Des weiteren verursacht die Quadratur zusammen mit einem Phasenfehler, der stets durch eine nicht unendlich gute Auflösung in einem Phasenabgleich der Demodulation existiert, einen Signalversatz (engl.: offset) im Nutzsignal.

Das Quadratursignal lässt sich somit auf zwei Arten auswerten. Zum einen lässt es sich durch eine Bewertung des Signalversatzes auswerten, der durch die Quadratur verursacht wird. Zum zweiten lässt es sich durch eine Bewertung des eigentlichen Quadratursignals durch eine Demodulation nach diesem Quadratursignal auswerten. Dies kann auf bekannte Art beispielsweise durch Auswertung des Quadratursignal mittels eines phasenempfindlichen Verstärkers (engl. lock-in amplifier) erfolgen.

Die Bewertung dieser Signale kann wiederum auf zwei Arten erfolgen. Die erste Art besteht darin, dass eines der beiden zuvor dargestellten Signale direkt ausgewertet wird. Dieses Signal wird in der Auswerteelektronik mit einem in einer Vergleichstabelle hinterlegten Wert verglichen und im Ergebnis eine Aussage über die korrekte Funktion des Sensors geliefert. Der hinterlegte Wert wird in diesem Fall während der Kalibrierung des Sensors aus den Sensordaten ermittelt und als Null-Wert in der Auswerteeinheit abgelegt. Die zweite Art nutzt den Umstand, dass das Quadratursignal proportional zur Amplitude der Antriebsschwingung des aktiven Sensors ist. Wenn das Quadratursignal proportional zur Amplitude des aktiven Sensors ist, dann stehen zwei verschiedene Quadraturen in erster Näherung im selben Verhältnis zueinander wie die Amplituden, die diese Quadratursignale erzeugt haben. Ein bewegliches Teil in Form eines rotatorischen Oszillators schwingt in einem angenommenen Beispiel einmal mit 3° und einmal mit 4° Amplitude der Antriebsschwingung. Dann gilt:

$$3°/4° = \text{Quad @ } 3° / \text{Quad @ } 4°.$$

In gleicher Weise lässt sich auch der Signalversatz auswerten.

Der Vorteil der zweiten Methode liegt in der Relativbewertung der Signale, so dass Temperatur- oder Lebensdauereffekte keine Rolle spielen. Des weiteren ist diese Methode auch unabhängig von der absoluten Größe des Quadratursignals.

Mit diesem Vorgehen werden ebenso wie mit bestehenden Systemen sowohl die mechanische Beweglichkeit (durch das entstandene Quadratursignal) als auch der elektrische Signalpfad (Verstärkerkette und Demodulationspfad) geprüft. Insbesondere weist üblicherweise das Quadratursignal eine mehrfache Amplitude des eigentlichen Nutzsignals auf, also auch ein mehrfaches des bisher angewendeten Selbsttestsignals.

Eine Bewertung der korrekten Funktion eines erfindungsgemäßen Messfühlers kann sowohl automatisch im Startfall erfolgen als auch während des Betriebs durch eine Änderung der Amplitude. Hierbei ist sowohl eine externe Anforderung des Selbsttests als auch eine autonome Durchführung des Selbsttests durch den Sensor denkbar. Im Gegenzug wird die Funktionalität als "gut" oder "schlecht" nach außen weitergeleitet, d.h. eine Bewertung der Selbsttestantwort durch einen Mikroprozessor o.ä. ist nicht mehr notwendig.

Es sind daneben auch weitere Ausführungsbeispiele denkbar.

**Patentansprüche**

1. Messfühler mit einer Selbsttestfunktion, einem beweglichen Teil (100) und einer Auswerteeinheit (320),

   - wobei das bewegliche Teil (100) einen eigenen Antrieb (300, 160) aufweist,
   - wobei der Antrieb (300, 160) dazu geeignet ist, das bewegliche Teil (100) in eine Antriebsschwingung zu versetzen,
   - wobei die Messgröße durch eine Auslenkung des beweglichen Teils (100) gegenüber einer Bezugslage repräsentiert ist,
   - wobei durch den Antrieb (300, 160) wenigstens eine weitere, parasitäre Auslenkung gegeben ist,

   **dadurch gekennzeichnet, dass**
   die Selbsttestfunktion durch Bewertung der parasitären Auslenkung in Abhängigkeit von der Amplitude der Antriebsschwingung in der Auswerteeinheit (320) realisiert ist.

2. Messfühler nach Anspruch 1, **dadurch gekennzeichnet, dass** die Amplitude der parasitären Auslenkung unabhängig von der Amplitude der Auslenkung durch die Messgröße ist.

3. Messfühler nach Anspruch 1, **dadurch gekennzeichnet, dass** die parasitäre Auslenkung in dieselbe Richtung wie die Messgröße erfolgt.

4. Messfühler nach Anspruch 3, **dadurch gekennzeichnet, dass** die parasitäre Auslenkung proportional zur Amplitude der Antriebsschwingung des beweglichen Teils (100) ist.

5. Messfühler nach Anspruch 3, **dadurch gekennzeichnet, dass** die parasitäre Auslenkung phasenverschoben zur Auslenkung durch die Messgröße ist.

6. Messfühler nach Anspruch 5, **dadurch gekennzeichnet, dass** die Selbsttestfunktion durch phasenempfindliche Auswertung der parasitären Auslenkung, insbesondere mittels eines phasenempfindlichen Verstärkers realisiert ist.

7. Messfühler nach Anspruch 3, **dadurch gekennzeichnet, dass** die parasitäre Auslenkung einen Signalversatz des die Messgröße repräsentierenden Messsignals bewirkt.

8. Messfühler nach Anspruch 7, **dadurch gekennzeichnet, dass** die Selbsttestfunktion durch Auswertung des Signalversatzes des die Messgröße repräsentierenden Messsignals realisiert ist.

**9.** Messfühler nach Anspruch 1, **dadurch gekennzeichnet, dass** der Messfühler ein mikromechanischer Sensor, insbesondere ein Drehratensensor ist.

**10.** Mikromechanischer Drehratensensor nach Anspruch 9, **dadurch gekennzeichnet, dass**

- das bewegliche Teil (100) als seismische Schwingmasse (100) ausgestaltet ist,
- der Antrieb (300, 160) als kapazitive Antriebsstruktur (160) ausgestaltet ist, welche geeignet ist, die seismische Schwingmasse (100) in eine Antriebsschwingung zu versetzen,
- die Schwingmasse (100) neben der Amplitude der Antriebsschwingung eine zusätzliche parasitäre Auslenkung in wenigstens einer Messrichtung für die Drehrate aufweist.

**Claims**

**1.** Measurement sensor having a self-test function, a movable part (100) and an evaluation unit (320),

- wherein the movable part (100) has a dedicated drive (300, 160),
- wherein the drive (300, 160) is suitable for causing the movable part (100) to effect a drive oscillation,
- wherein the measurement variable is represented by a deflection of the movable part (100) relative to a reference position,
- wherein at least one further, parasitic deflection is provided by the drive (300, 160),

**characterized in that**
the self-test function is realized by assessment of the parasitic deflection depending on the amplitude of the drive oscillation in the evaluation unit (320).

**2.** Measurement sensor according to Claim 1, **characterized in that** the amplitude of the parasitic deflection is independent of the amplitude of the deflection as a result of the measurement variable.

**3.** Measurement sensor according to Claim 1, **characterized in that** the parasitic deflection is effected in the same direction as the measurement variable.

**4.** Measurement sensor according to Claim 3, **characterized in that** the parasitic deflection is proportional to the amplitude of the drive oscillation of the movable part (100).

**5.** Measurement sensor according to Claim 3, **characterized in that** the parasitic deflection is phase-shifted with respect to the deflection as a result of the measurement variable.

**6.** Measurement sensor according to Claim 5, **characterized in that** the self-test function is realized by phase-sensitive evaluation of the parasitic deflection, in particular by means of a lock-in amplifier.

**7.** Measurement sensor according to Claim 3, **characterized in that** the parasitic deflection effects a signal offset of the measurement signal representing the measurement variable.

**8.** Measurement sensor according to Claim 7, **characterized in that** the self-test function is realized by evaluation of the signal offset of the measurement signal representing the measurement variable.

**9.** Measurement sensor according to Claim 1, **characterized in that** the measurement sensor is a micromechanical sensor, in particular a rate-of-rotation sensor.

**10.** Micromechanical rate-of-rotation sensor according to Claim 9, **characterized in that**

- the movable part (100) is configured as a seismic oscillating mass (100),
- the drive (300, 160) is configured as a capacitive drive structure (160) suitable for causing the seismic oscillation mass (100) to effect a drive oscillation,
- the oscillating mass (100) has, besides the amplitude of the drive oscillation, an additional parasitic deflection in at least one measurement direction for the rate of rotation.

**Revendications**

**1.** Capteur de mesure ayant une fonction de test automatique, une pièce mobile (100) et une unité d'exploitation (320),

- la pièce mobile (100) ayant son propre moyen d'entraînement (300, 160),
- le moyen d'entraînement (300, 160) permettant d'entraîner en oscillation la pièce mobile (100),
- la grandeur de mesure étant représentée par le débattement de la pièce mobile (100) par rapport à une position de référence,
- le moyen d'entraînement (300, 160) engendrant au moins un autre débattement, parasite,

**caractérisé en ce que**
la fonction de test automatique est réalisée par l'exploitation du débattement parasite en fonction de l'amplitude de l'oscillation d'entraînement dans l'unité d'exploitation (320).

2. Capteur de mesure selon la revendication 1, **caractérisé en ce que** l'amplitude du débattement parasite est indépendante de l'amplitude du débattement de la grandeur de mesure.

3. Capteur de mesure selon la revendication 1, **caractérisé en ce que** le débattement parasite se fait dans la même direction que la grandeur de mesure.

4. Capteur de mesure selon la revendication 3, **caractérisé en ce que** le débattement parasite est proportionnel à l'amplitude de l'entraînement en oscillation de la pièce mobile (100).

5. Capteur de mesure selon la revendication 3, **caractérisé en ce que** le débattement parasite est déphasé par rapport au débattement par la grandeur de mesure.

6. Capteur de mesure selon la revendication 5, **caractérisé en ce que** la fonction de test automatique est réalisée par l'exploitation sensible en phase, du débattement parasite notamment à l'aide d'un amplificateur sensible à la phase.

7. Capteur de mesure selon la revendication 3, **caractérisé en ce que** le débattement parasite produit un décalage du signal de mesure représentant la grandeur de mesure.

8. Capteur de mesure selon la revendication 7, **caractérisé en ce que** la fonction de test automatique est réalisée par l'exploitation du décalage du signal de mesure représentant la grandeur de mesure.

9. Capteur de mesure selon la revendication 1, **caractérisé en ce qu'** il s'agit d'un capteur micromécanique, notamment d'un capteur de vitesse de rotation.

10. Capteur micromécanique de vitesse de rotation selon la revendication 9, **caractérisé en ce que**

   - la partie mobile (100) est réalisée par une masse oscillante sismique (100),
   - l'entraînement (300, 160) est en forme de structure d'entraînement capacitive (160) permettant d'entraîner en oscillation la masse sismique oscillante (100),
   - la masse oscillante (100) présente, à côté de l'amplitude de l'oscillation d'entraînement, un débattement parasite supplémentaire dans au moins une direction de mesure de la vitesse de rotation.

## Fig. 1A

## Fig. 1B

### A - A'

## Fig. 2A

## Fig. 2B
## A - A'

## Fig. 3

## Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1174683 A